# EUROPEAN PATENT SPECIFICATION

(11) **EP 1 882 022 B1**
(45) Date of publication and mention of the grant of the patent: **06.05.2009**
(21) Application number: 06770650.7
(22) Date of filing: 18.05.2006
(51) Int. Cl.: C09J 4/00, C09J 155/00, C09J 133/10, C09K 3/10, B05C 11/00

(54) **AMBIENT CURABLE PROTECTIVE SEALANT**
BEI RAUMTEMPERATUR HÄRTBARES, SCHÜTZENDES DICHTUNGSMITTEL
MATIERE ETANCHE PROTECTRICE DURCISSABLE A TEMPERATURE AMBIANTE

(30) Priority: 19.05.2005 US 682733 P
(43) Date of publication of application: 30.01.2008
(73) Proprietor: LORD CORPORATION, Cary, NC 27511 (US)
(72) Inventor: BENNETT, Ruth, M., Erie, PA 16509 (US); PRESSLEY, Mark, W., Cary, NC 27519 (US)
(74) Representative: Lambert, Ian Robert
(86) International application number: PCT/US2006/019426
(87) International publication number: WO 2006/125148

(56) References cited:
- US-A- 4 223 115
- US-A- 4 467 071

## Description

### Field Of The Invention

The invention is directed to two-part, elastomeric sealant coatings that are curable at ambient temperature. The invention also pertains to a method for protecting metal seams from corrosion by dispensing a two-part mixture as a sealant coating directly over metal seams, allowing a cure to take place at ambient temperature, applying corrosion primer to the uncoated metal surface surrounding the sealant coating, heat-curing the primer, and subsequently applying and curing at least one paint coating, e.g., 2-coat clear coat paint. The elastomeric sealant coatings provide corrosion protection over the seams and maintain a crack-free surface over a broad temperature range. The sealant coatings are useful for applying over seams of joined metal parts, especially weld seams arising in the manufacture of automotive unit bodies, doors, floors, hoods, trunks, and trunk lids.

### Background of the Invention

Joining of shaped metal stampings in automotive manufacture give rise to various seams, gutters, and hem joints, and the like, hereinafter collectively referred to as seams. Seams occur commonly at floor pan junctions, in trunks, tailgates, roofs, passenger compartments, wheelhouses, shock towers, rocker panels, firewalls, and door hem flange. These seams are currently covered with a thin bead of conventional sealant, e.g., vinyl plastisol or butyl rubber sealants as a protective coating to body in white, prior to application of primers and body paint.

It is industrially useful to provide curing of a sealant under ambient conditions. U.S. Patent 6,858,260 to Taylor, et al, for example (2005) disclose a UV curable sealant composition containing epoxy compound and one or more polyol(s) having enhanced durability during the thermal bake cycles in automotive applications. The benefit of a localized source of curing energy using photoinitiators is offset by the complexity of applying radiation over complex shapes.

U.S. Pat. No. 4,467,071 discloses an acrylic structural adhesive adapted to overcome deficiencies in high temperature strength. The structural adhesives contain styrene and/or methacrylate monomers (10 to 90 weight percent, preferably 17 to 87 weight percent), a selection from among several types of polymeric additives, e.g., butadiene homopolymers and copolymers (1 to 30 weight percent, preferably 7 to 27 weight percent), PMMA in monomer (2 to 60 weight percent, preferably 5 to 60 weight percent), styrene polymer (2 to 60 weight percent, preferably 5 to 60 weight percent), olefinic unsaturated urethane reaction products (10 to 90 weight percent, preferably 13 to 83 weight percent), and functionalized butadiene polymers; from 0.1 to 20, preferably 2 to 10, percent by weight, based on total weight of polymerizable materials and reducing agent; epoxy resin present at from 1 to 5, preferably 1.75 to 4.25, epoxide equivalents per equivalent of P-OH. Although the modification of an acrylic adhesive is seen to improve the hot strength, nothing is disclosed concerning the flexibility properties and adhesion to metal at temperatures below 0 °C.

U.S. Patent No. 4,223,115 discloses room temperature-curable adhesive systems comprising a solution or dispersion of a polymeric material in a monomer co-polymerizable therewith having incorporated therein certain phosphorus-containing compounds.

It would be industrially important to provide protective sealant coating that can be applied to minimally prepared metal surfaces, e.g., electrogalvanized steel; that cures at ambient temperature; that can be subjected to abusive curing conditions; and result in paintable corrosion barrier which does not detract from the paint appearance, and remains flexible and crack-free at sub-zero °C temperatures.

### Summary of the Invention

According to the invention there is provided a room temperature-curable sealant composition according to claim 1 of the appended claims as well as the dependent claims, a dispenser according to claim 15 of the appended claims, and a method for coating a seam according to claim 16 of the appended claim.

In one aspect, the invention is a sealant adapted as a 100% solids, metal coating composition that is curable at ambient temperature to a tackfree film sufficiently adhering to metal substrates and providing flexibility to bend 180° over a 5.08 cm. mandrel (at -30°C and at +23_{°}C) without cracking or detaching from the metal substrate. The sealant composition contains radical polymerizable components, an oxidizing agent and reducing agent, and optionally an epoxy component, polar wax, and thixotropic agent. The radical-polymerizable components comprise 25 - 45 weight percent of alkacrylate monomer and co-reactive phosphorous monomer and from 55 - 75 weight percent of an ethylenic unsaturated liquid elastomer polymer having a number average MW of from 3,000 to 9,500 and a backbone polymer segment having glass transition temperature of (T_{g} ) of -30C and below. From 32-55 weight percent of the sealant coating composition consists of the liquid elastomer polymer and from 2 to 15 weight percent consists of the epoxy component.

Another aspect of the invention resides in a dispenser apparatus comprising two containers and mechanical force to convey the separate container contents through a metering zone and then a mixing zone. The apparatus is conventional and includes containers respectively holding Parts A and B which react within several minutes after dispensing the mixture onto the metal substrate and over the course of additional time at ambient temperature the dispensed mixture cures into a permanent flexible, adhering film as a protective and cosmetic seam sealer. The dispenser apparatus conveys the container contents into a metering zone through pre-selected volume flow ratio zones for Parts A and B. The volume ratio can be conveniently adjustable in a range typically from 1:1 to 10:1. Adjustment of the component parts in parts A and B are made to accommodate the preselected volume ratio, as will be understood in the art. The container of Part A comprises a fluid mixture of part of the redox system, a thixotrope, a polar wax, 25 - 45 weight percent of a mix of alkacrylate monomer and co-reactive phosphorous monomer and from 55 - 75 weight percent of an ethylenic unsaturated liquid elastomer polymer having a number average MW of from 3,000 to 9,500 and a backbone T_{g} of -30°C or below. The container of Part B comprises an epoxy component, a liquid carrier, and a portion of the redox system (e.g., oxidizing agent). The epoxy component is present in an amount representing 2-15 weight percent of the combined (volume-proportioned) weight of Parts A and B.

In a preferred arrangement of components, the invention is a two-part sealant composition comprising a 1:1 to 10: 1 volume ratio mixture of the following components:

| (Part A) | | |
|---|---|---|
| ethylenic unsaturated components | wt.% of radical polymerizables | wt.% of (A+B) |
| methacrylate monomers | 25 - 45 wt.% | |
| unsaturated liquid elastomer | 55 - 75 wt.% | 32 - 55 wt.% |
| reducing agent fraction of redox system | | 0.20 -.50 mol |
| | | |
| polar wax | | 1.5 - 5 wt.% |
| rheology modifier | 1 - 6 wt.% | |

| (Part B) | wt.% of part B | wt. % of (A+B) |
|---|---|---|
| epoxy compound | | 2 -15 wt.% |
| oxidizing agent fraction of redox system | | 0.50- 80 mol |
| optional inorganic filler | | 0 - 35 wt.% |
| rheology modifier | 1 - 6 wt.% | |
| carrier liquid | 20 - 80 wt.% | |

### Detailed Description

The cured sealant composition according to the invention exhibits a Young's modulus of less than 35,000 p.s.i. (241.3 N/mm²). A cured rubber-toughened methacrylate structural adhesive exhibits a Young's modulus of 50,000 p.s.i. (344.7 N/mm²) and higher and a cured metal-supported film of adhesive will crack on bending less than 45 degrees at -30°C. The film of cured sealant composition according to the invention coated on steel can bend 180° over a 2-inch (5.08 cm) mandrel at -30°C without cracking. Without being bound by theory, it is believed that the continuous polymer phase of the sealant is dominated by the cured elastomer segment having a backbone polymer of Tg of -30°C or less, and the continuous phase is reinforced by a dispersed network of cured epoxy and alkacrylate polymerizates, based on the proportion of each such component according to the invention.

The sealant coating composition according to the invention employs ethylenic unsaturated components that undergo radical curing or polymerization at ambient temperature using a redox initiation system. The radical-curing components comprise a combination of monomer(s) and a terminal unsaturated elastomer of a molecular weight rendering the elastomer normally liquid at ambient temperature. The monomer(s) can be selected among the alkacrylates, as described below by considering the inherent polymer glass transition temperature of their polymerizate, that is, not in combination with the ethylenic unsaturated elastomer. The glass transition temperature (T_{g}) of the selected alkacrylate monomer and phosphate monomer mixture is +20°C and higher, more preferably +50°C and higher. The liquid elastomer comprises a diene polymer backbone that exhibits a T_{g} of -30°C or below, preferably -50°C or below. Of the total radical-polymerizable components, critical flexibility properties of the sealant are obtained when 25-45 weight percent proportion of the total radical-polymerizable components comprise alkacrylate monomer and phosphate monomer, is combined with a major proportion of 55 weight percent - 75 weight percent of unsaturated elastomer having a backbone polymer T_{g} of - 30°C or below.

The minor proportion of the monomeric radical-polymerizable components is made up of one or more ethylenic unsaturated methacrylate monomers, i.e., α,β-unsaturated C₁-C₂₀ esters of alkyl (C₁-C₄) -substituted acrylic acid (collectively, alkacrylate monomers). A representative monounsaturated alkacrylate is III: 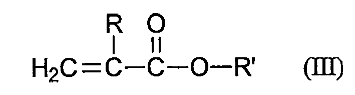 wherein R is a C₁-C₄ alkyl radical; and R' is a substituted or unsubstituted, linear or branched C₁-C₂₀ organic radical that may be the same or different than R.

The alkacrylate monomers may comprise only mono-unsaturated monomers, or a combination of mono-, di-, tri-, and/or tetra-functional unsaturated monomers. In another embodiment, the alkacrylate monomer can comprise only di-unsaturated alkacrylate. In further alternatives, a combination of alkacrylate monomer, with other copolymerizable vinyl monomers can be used.

Optional alkacrylates including special function groups other than alkyl groups, for example, hydroxy, amide, cyano, chloro, and silane groups are preferably not employed, but are widely available industrially. Preferred mono-unsaturated alkacrylates are C₁-C₉ linear or alicyclic alkyl esters of methacrylic acid. Specific methacrylates in general include methyl methacrylate, ethyl methacrylate, and butyl methacrylate, cyclohexyl methacrylate (CHMA), 2-ethylhexyl methacrylate, decyl methacrylate, dodecyl methacrylate, tert-butyl methacrylate, 4-t-butyl-cyclohexylmethacrylate, 2-isopropyl 5-methyl cyclohexylmethacrylate, 3,5-dimethyl cyclohexylmethacrylate, 3,3,5-trimethylcyclohexyl methacrylate, 3,4,5-trimethylcyclohexyl methacrylate, 3,3,5,5-tetramethylcyclohexyl methacrylate, bornyl methacrylate, isobornyl methacrylate and tetrahydrofurfuryl methacrylate (THFMA). Particularly preferred polymerizable monomers are C₁-C₄ alkyl substituted acrylates (e.g., methacrylates, ethacrylates, tetrahydrofurfuryl methacrylate and cyclohexyl methacrylate, the selection calculated to exhibit a T_{g} of -20°C and above, preferably +20°C and above. In the kit embodiment consisting of two separately contained prepackaged parts, the side or part containing the alkacrylate monomers should include a low level (PPM level) of conventional inhibitor, for example any of the well-known hydroquinones (HQ, MEHQ, DDBQ), naphthaquinone, methylhydroquinone, tetramethylhydroquinone, and tert-butyl catechol inhibitors.

The di-, tri- (collectively, polyunsaturated) alkacrylates optionally employed alone or in mixture with monounsaturated alkacrylate include glycol diacrylates, trimethylol tri(meth)acrylates, polyether polyacrylates and - polymethacrylates. Species include ethylene glycol dimethacrylate, ethylene glycol diacrylate, hexane diol diacrylate (HDODA), diethylene glycol dimethacrylate, triethyleneglycol dimethacrylate, diethylene glycol bismethacryloxy carbonate, tetraethylene glycol dimethacrylate, diglycerol diacrylate, pentaerythritol triacrylate, trimethylopropane trimethacrylate, polyethylene glycol diacrylate, dimethacrylate of bis(ethylene glycol)adipate, dimethacrylate of bis(ethylene glycol)maleate, dimethacrylate of bis(ethylene glycol)phthalate, dimethacrylate of bis(tetraethylene glycol)phthalate, dimethacrylate of bis(tetraethylene glycol)sebacate, and dimethacrylates of bis(tetraethylene glycol)maleate.

Included in mixture with alkacrylate monomer(s) is a co-reactive phosphate compound. "Co-reactive", means the phosphate compound is co-reactive with ethylenic unsaturated groups, or in addition to catalyzing the cure of epoxy compounds are incorporated into the cured epoxy materials. The preferred acidic phosphorous compounds are ethylenic unsaturated acid phosphate monomers. The phosphate compound is used in an amount of from 1 weight percent to 10 weight percent, preferably from 3 to 6 weight percent of the total radical-polymerizable materials in the sealant composition. The more preferred phosphorous compounds are methacrylated partial esters of acid phosphate e.g., having the group methacryloyl-P(=O)OH. Examples of the acid phosphate monomers are monoesters of phosphinic, phosphonic and phosphoric acids having one unit of vinyl, (meth)acryloyl- or allylic unsaturation. Specific reference is made to the following ethylenic unsaturated acid phosphate monomers: 2-methacryloyloxyethyl phosphate; bis-(2-methacryloxyloxyethyl) phosphate; 2-acryloyloxyethyl phosphate; bis-(2-acryloyloxyethyl) phosphate; methyl-(2-methacryloyloxyethyl) phosphate; ethyl methacryloyloxyethyl phosphate; methyl acryloyloxyethyl phosphate; ethyl acryloyloxyethyl phosphate are suitable; and other known examples include vinyl phosphonic acid; cyclohexene-3-phosphonic acid, allyl phosphonic acid; allyl phosphinic acid; β-methacryloyloxyethyl phosphinic acid; diallylphosphinic acid; and allyl methacryloyloxyethyl phosphinic acid. Some of the suitable acid phosphate monomers may not contain ethylenic unsaturation, but are co-reactive with epoxy compounds in addition to their catalytic effect of the acid moiety. Acid phosphate monomers with co-reactivity with epoxies include α-hydroxybutene-2 phosphonic acid; 1-hydroxy-1-phenylmethane-1,1-diphosphonic acid; 1-hydroxy-1-methyl-1-disphosphonic acid: 1-amino-1 phenyl-1,1-diphosphonic acid; 3-amino-l-hydroxypropane-1,1-disphosphonic acid; amino-tris (methylenephosphonic acid); gamma-amino-propylphosphonic acid; gamma-glycidoxypropylphosphonic acid; and phosphoric acid-mono-2-aminoethyl ester. A preferred phosphorus-containing compound has a structure that may be represented by the formula V 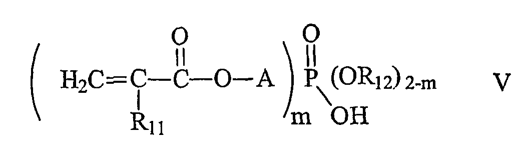 wherein R₁₁ is selected from the group consisting of hydrogen, an alkyl group having from 1 to 8, preferably 1 to 4, carbon atoms, and CH₂=CH-; R₁₂ is selected from the group consisting of hydrogen, an alkyl group having from one to 8, preferably one to 4 carbon atoms; A is selected from the group consisting of -R₁₃ O- and (R₁₄ O)ₙ , wherein R₁₃ is an aliphatic or cycloaliphatic alkylene group containing from one to 9, preferably 2 to 6, carbon atoms; R₁₄ is an alkylene group having from one to 7, preferably 2 to 4, carbon atoms; n is an integer from 2 to 10, and m is 1 or 2, and m= 1 or 2, and preferably m = 1.

The preferred acid phosphate ester compounds employed are selected from mono-methacryloyloxyethyl phosphate (also termed mono-methacryloxyethyl) phosphate (HEMA-P), bis-methacryloyloxyethyl phosphate, mono-methacryloyloxypropyl phosphate, bis-methacryloxypropyl phosphate, and combinations thereof.

The sealant coating comprises a di-terminal ethylenic unsaturated elastomer oligomer representing 55 weight percent to 75 weight percent of the total radical-polymerizable components. The terminal ethylenic unsaturated elastomer makes up from 32 weight percent to 55 weight percent, preferably 35 weight percent to 45 weight percent of the total of parts A and B of the sealant composition.

Representative terminal ethylenic unsaturated elastomer oligomers (low molecular weight polymer) include (meth)acrylated polybutadiene, polybutadiene dimethacrylate (PBD methacrylate), or vinyl-terminated butadiene copolymers known in the art. The elastomer backbone of the terminal unsaturated elastomers include polybutadiene, polyisoprene and their copolymers. Ethylenic unsaturated groups, e.g. from (meth)acryl-bearing reactive compounds may be introduced at the elastomer oligomer terminal units in a number of known ways, depending on the terminal functionality of the oligomer, e.g., amine (as for butadiene polymers: ATBN), carboxyl (as for butadiene polymers: CTBN), monomer coupling to hydroxyl terminal groups (R-45-HT), or to terminal mercapto groups, and terminal halogens, e.g. iodine. A preferred di-terminal ethylenic unsaturated elastomer is prepared by reaction of glycidal methacrylate with carboxy-terminated liquid butadiene (CTB). Another approach begins with hydroxyl-terminal polybutadiene, reaction product with anhydride, ring opening the anhydride and coupling to the terminal OH groups, followed by reaction with two mole equivalents glycidal methacrylate. Preferred ethylenic unsaturated liquid elastomers are selected from vinyl-terminated liquid rubber, methacrylate-terminated polybutadiene, acrylate-terminated polybutadiene, methacrylate-terminated polybutadiene-acrylonitrile copolymers, acrylate-terminated polybutadiene-acrylonitrile, copolymers, and mixtures thereof. By "low molecular weight" is meant the elastomer is liquid at normal ambient temperature and dissolves in alkacrylate monomer with a typical number average molecular weight of from 3000 to 9,500. The low molecular weight ethylenic unsaturated elastomer differs from solid, high polymer elastomers that characteristically form a gel by swelling in contact with the low levels of alkacrylate monomer according to the invention. Such swelling would introduce excessive viscosity and non-uniform dispensing as a sealant. Representative commercial di-terminal unsaturated liquid butadiene-acrylonitrile copolymers include Hycar® VTBN (Noveon) and CN-301 polybutadiene dimethacrylate (Sartomer).

In a further embodiment of the present invention, the sealant further comprises, in a specified amount of from 2 weight percent to 15 weight percent, preferably from 6 weight percent to 13 weight percent a hardenable, epoxy functional compound (liquid resin) that contains statistically more than one oxirane ring per molecule (polyepoxide). The preferred epoxy-functional material contains two epoxy groups per molecule. A mono-functional epoxy compound can also be combined with the polyepoxide component as a viscosity modifier that acts as a reactive diluent. Epoxy resins suitable for use herein include polyglycidyl ethers of polyhydric alcohols, and polyglycidyl esters of polycarboxylic acids. Polyglycidal esters can be obtained by reacting an epihalohydrin, such as epichlorohydrin or epibromohydrin, with a aliphatic or aromatic polycarboxylic acid such as oxalic acid, succinic acid, glutaric acid, terephthalic acid, 2,6-naphthalene dicarboxylic acid, and dimerized linoleic acid. The polyglycidal ethers of aromatic polyols are preferred and are prepared by reacting epihalohydrin with a polyhydroxy phenol compound in the presence of an alkali. Suitable starting polyhydroxy phenols include resorcinol, catechol, hydroquinone, bis(4-hydroxyphenyl)-2,2-propane also known as bisphenol A, bis(4-hydroxyphenyl)-1,1-isobutane, 4,4-dihydroxybenzophenone, bis(4-hydroxyphenol)-1,1-ethane, bis(2-hydroxyphenyl)-methane, and 1,5-hydroxynaphthalene, and the diglycidyl ether of bisphenol A.

Commercially available curable epoxy materials include, for example, Epon® DPL-862, Eponex® 1510 and Eponex® 1513 (hydrogenated bisphenol A-epichlorohydrin epoxy resin) from Resolution Performance Products; Santolink® LSE-120 from UCB Coatings; Epodil® 757 (cyclohexane dimethanol diglycidylether) from Air Products and Chemicals; Araldite GY-6010, or XUGY358 or PY327 from Vantico, Hawthorne, N.Y.; Aroflint® 393 and 607 from Reichhold Chemicals, Durham, N.C.; and ERL4221 from Union Carbide, Tarrytown, N.Y. Also suitable are blends of epoxy materials, for example a mix of Epon® 828 (bisphenol A-epichlorohydrin epoxy resin) with difunctional epoxide reactive diluent. Examples of reactive diluents include neopentylglycol diglycidylether, resorcinol diglycidylether and cyclohexanedimethanol diglycidylether. Another blend example is bisphenol F epoxy resin i.e., Resolution Epon DPL 862 and epoxy phenol novolak resin Epalloy® 8250 from CVC, Cherry Hill, N.J.; Araldite® EPN 1139 from Vantigo; and DEN432 and DEN438 from Dow Chemical. A preferred epoxy blend is a combination of epoxy resin precursor and an epoxy-functional flexibilizer. A suitable epoxy flexibilizer is an adduct of diglycidyl ether of bisphenol A and CTBN, one version which is commercially available as Resolution Epon resin 58005. Preferably the B-side contains an epoxy-reactive component comprising 60 - 100% by wt. of epoxy curable components of a hardenable (thermosetting) epoxy resin and 0 40% by wt. of the epoxy curable components of an epoxy-functional flexibilizer (Epoxy B).

The sealant cures at ambient conditions within an hour typically using conventional redox couple catalyst systems that are well known. Known redox systems comprise an oxidizing agent and reducing agent contained separately in the two-part sealant, and which form a sufficient concentration of free radicals to initiate addition polymerization of the radical-polymerizable components. Additional heat if used increases the rate of cure. The curing reaction is mildly exothermic. Representative conventional oxidizing agents include organic peroxides such as benzoyl peroxide and diacyl peroxides, hydroperoxides such as cumene hydroperoxide, peresters such as t-butylperoxybenzoate; ketone hydroperoxides such as methyl ethyl ketone, organic salts of transition metals such as cobalt naphthenate, and compounds containing labile chlorine such as sulfonyl chloride.

Representative reducing agents include suffinic acids and azo compounds. The preferred reducing agents are aromatic tertiary amines. The tertiary amines include, diisopropyl-p-toluidine, N,N-dimethyl aniline, tris(dimethyl-aminomethyl)phenol, . N,N-dimethylaminomethylphenol (DMAMP) and dimethyl-p-toluidine (DIIPT). Other reducing agents include azoisobutyric acid dinitrile; alpha-aminosulfones, e.g., bis(tolylsulfonmethyl) amine, bis-(tolylsulfonmethyl) ethyl amine and bis(tolylsulfonmethyl)-benzyl amine; and aminealdehyde condensation products, e.g., condensation products of aliphatic aldehydes such as butyraldehyde with primary amines such as aniline or butylamine.

The elastomer sealant coating is dispensed by mixing of two-parts according to the invention and especially useful for applying to unpainted metal surfaces intended to be primed with corrosion protectant and paint. The invention is readily made by combining radical-polymerizable components (alkacrylate monomer and dissolved low moelcular weight ethylenic unsaturated elastomer), rheology modifier, and reducing agent as part A; and combining oxidizing agent, rheology modifier, liquid carrier and epoxy component as part B. The epoxy component is kept in the part that does not contain an epoxy cure agent, such as acid phosphate monomer. Combining the reducing agent and epoxy resin in one part, while combining oxidant, inhibitors and radical-polymerizable components in the other part is less preferred.

The sealant is readily adapted to be dispensed in a volume ratio of parts A:B of from 1:1 to 10:1. A preferred volume mix ratio is from 3.5:1 to 4.5:1. and more preferably a 4:1 volume ratio is used. The viscosity of side A may be in a range of from 10,000 - 1 million cP (10 Pa-s - 1,000 Pa-s), and the B-side typically 50,000 - 500,000 cP (50 Pa-s - 500 Pa-s).

Preferably the B-side comprises a liquid epoxy resin with an epoxy equivalent ratio of 2.0, a peroxide initiator, mineral filler, thixotropic agent, and a phthalate ester carrier fluid. Optionally, from 5-30 % on weight of epoxy component of an epoxidized low molecular weight elastomer can be employed. As for carriers for dissolving peroxide initiators and suspending solids of the B-side, a variety of liquid compounds and liquid polymers are suitable. The carrier may be a conventional plasticizer, and/or a mono-functional epoxy material. Suitable plasticizers include phthalate esters, esters of phosphoric acid, trimellitate esters, esters of adipic acid, as well as stearate-, sebacate-, and oleate esters; liquid polymers, e.g., polyester, polyisobutylene, and polyisoprene polymers, all of which are known and conventional.

Anti-sag properties are obtainable with the use of rheology modifiers. Known rheology modifiers include polyamine amides, polyamides, or an unsaturated polycarboxylic acid. Rheology modifiers comprising a carboxylate acid salt of a polyamine amide, a phosphoric acid salt of a long chain carboxylic acid polyamine amide or a solution of a partial amide and alkylammonium salt of a higher molecular weight unsaturated polycarboxylic acid, nano-sized silica, and polysiloxane copolymers are suitable. Any combinations or mixtures of various suspension aids can be used. Specific examples of polymeric rheology modifiers are Anti-Terra® polymers from BYK CHEMIE, such as Anti-Terra®-202, 204, and -205, -P. -U-80, in addition to BYK-P-105, Anti-Terra® U and Lactimon® types, all available from Byk-Chemie Gmbh Ltd. Disparlon® 6500 polyamide, from King Industries is also suitable. Theology modifiers are described in U.S. Pat. No. 4,795,796. The preferred rheology modifier is fumed silica. A preferred rheology modifier is Cab-O-SIL® HS-5, or TS-720, from Cabot. An effective range amount for rheology modifier is from 1 to 6 weight percent. Preferred range for fumed silica is 2-5 weight percent in each part, and the optimum amount is readily determined by evaluating the degree of slump or sag of uncured sealant bead applied to a vertical surface.

In an additional embodiment of the present invention, the sealant further comprises a polar wax in an amount from greater than 1 to 8 weight percent, and preferably 1.5 to 5 weight percent, based on the total weight of the sealant composition. Wax is necessary to reduce surface tack, but the polarity of the wax should provide sufficient surface-wet ability. Wet ability is evaluated by measuring water contact angle. A water contact angle of at least 120°, as measured in a conventional goniometer is acceptable. The polar wax must also be miscible in the alkacrylate monomers. Included among the suitable monomer-miscible waxes are derivatives of the long-chain fatty acids, sometimes referred to by other terms, and inclusive herein of the following: so-called mineral waxes (e.g. coal derived), ester waxes, and partially saponified acid waxes. It may be possible to affect monomer miscibility of a given wax by way of oxidization and acid treatment of synthetic non-polar (e.g., paraffin, α-olefin waxes), or by forming fatty acid amidation products like, is N, N'-distearylethylenediamine [110-30-5], which has a melting point of ca 140°C, and an acid number of ca 7.

Montan wax [CAS 8002-53-7] derived by solvent extraction of lignite and supplied under the name Hoeschst wax® is a suitable polar wax. The composition of a mineral wax is known to depend on the material from which it is extracted, but usually such wax is not only comprised of a waxy substance but also varying amounts of resin, and asphalt. Products from further processing to remove resins and asphalt, known as refined montan wax are known. White montan wax is also derivatized to its esters by reaction with alcohol. The wax component of montan is a mixture of long-chain (C₂₄ - C₃₀) esters (62-68 weight percent), long-chain acids (22-26 weight percent), and long-chain alcohols, ketones, and hydrocarbons (7-15 weight percent). Crude montan has an acid number of 32, and a saponification number of 92. Examples of commercially available montanic acid ester waxes include Hoechst Wax S, E, OP, and BJ. (Clariant, Basel, CH).

The polar wax may be a hard wax, e.g., acid wax, ester wax, and partially saponified ester wax, or soft wax including certain montan soft wax. A preferred miscible wax comprises a mixture of fatty C₈ - C₂₀ acid esters of fatty alcohols, e.g. cetyl palmitate. A referred polar wax is synthetic mixture comprising 20-30 weight percent of C₁₄ and lower alkyls, 50-55 weight percent of C₁₆ alkyls, and 20-25 weight percent of C₁₈ alkyls. A suitable monomer-miscible wax based on natural spermaceti wax typically contains 7.1 weight percent C₁₂ or lower alkyls, 20.3 weight percent C₁₄ alkyls, 52 weight percent C₁₆ alkyls and 20.6 weight percent C₁₈ alkyls. A preferred monomer-miscible wax is a synthetic wax from Ashland Chemical Co. under the STARFOL® designation, an I.V. of 1.0, an acid value of 2, a capillary melting point specification of 46-49 °C., a saponification value of 109-117, and believed to contain 0.5% C₈ -C₁₀ , 7.5 weight percent C₁₂ or lower alkyls, 18 weight percent C₁₄ alkyls, 50 weight percent C₁₆ alkyls and 24 weight percent C₁₈ alkyls.

Useful conventional additives optionally included are non-reactive pigments (carbon black), colorants, reactive diluents, mineral fillers such as calcium carbonate, titanium dioxide, talc and wollastonite. The optional additives are employed in an amount that does not cause unacceptable adverse effects on the cure process, and especially the mandrel bending capabilities illustrated below.

The compositions of this invention are maintained as separate parts A and B until dispensing. Upon dispensing the mixture, the embodiments illustrated herein provide up to 2 minutes of working, or open-time. The two parts may be dispensed after passing through a static mixing zone employed in the dispenser apparatus, or preferably as pumped through a pressurized meter-dispenser into a dynamic mixing zone where a driven member imparts shear mixing under close tolerances, and the mixture is applied to the surface to be seal coated.

An illustrative, known adhesive dispensing system will typically include a first container, a second container, a fluid flow-control (i.e., metering) device, and a dispensing head. The first container contains one of the parts with a first supply tube in fluid communication therewith, leading to a first metering chamber in a fluid-flow-control device. A second supply tube is in fluid communication with the part B composition leading to a second metering chamber in the fluid-flow-control device. A first application tube is in fluid communication with the fluid-flow-control device and the dispensing head. A second application tube is in fluid communication with the fluid-flow-control device and the dispensing nozzle. Left and right halves may be defined within the dispensing head for receiving parts A and B. The dispensing head may be operated pneumatically as is known in the art. A static mixing nozzle affixed to the delivery end of the dispensing head. The mixing nozzle may define a series of baffles or helical mixing elements and an exit orifice.

Any suitable force for propelling parts A and B through the dispensing system may be employed. For example, two pumps may pump the parts from the containers and into the fluid-flow-control device. They fluid-flow-control device may include various proportioning mechanisms as is known in the art, for example, displacement rods, for delivering pre-selected volume amounts to the dispensing head.

An example dispensing system is a cartridge/static mixer as described, for example, in U.S. Pat. Nos. 5,082,147; 4,869,400; 4,767,026; and 3,664,639 and German Utility Patent No. 68501010 (published Dec. 5, 1985). FIG. 2 depicts one embodiment of a cartridge/static mixer system as described in U.S. Pat. No. 4.767.026

In characterizing the balance of several performance properties demonstrated by the sealant coating, a number of evaluations may be made, including measuring the cure rate as peak exotherm temperature and time to peak temperature. A flexibility test according to a mandrel bend test per ASTM D 4338 - 97 is made by applying a nominally 3 mm x 10 mm protective coating bead on a cold-rolled steel (CRS) test panel, allowing the protective coating to cure at RT, and then bending the test sample 180 degrees by folding the metal panel over a 5.08 cm mandrel. The bend test is evaluated before and after abuse bake conditions (30 mins. @ 204°C) at room temperature (RT) and at -30°C. Primary adhesion of the sealant coating to metal is evaluated by lap shear strength, measured after a room temperature cure and after the aforementioned abuse bake conditions, and adhesion can be evaluated by attempting to pry the sealant film from the metal substrate and observing adhesive vs. cohesive failure.

The following additional properties are achieved by the sealant coating of the invention:
(i) Lap Shear Strength of at least 280 N/cm² with exclusively cohesive failure to metal;
(ii) humidity layover resistance-i.e., no loss of metal adhesion after 28 days at 23°C and 80% relative humidity;
(iii) room temperature cure to a low tack level within one hour;
(iv) non-sagging (self-supporting) bead on vertical surfaces;
(v) adherence to body paint with no change in DOI / appearance;
(vi) corrosion protection with no undercutting corrosion after 10 VDA cycles;
(vii) flexibility to bend 180° around a 2 inch (5.08 cm) mandrel without cracking at room temperature and at -30° C, before and after paint bake cycle of 30 mins. at 204°C (400°F).

The following procedure is suitable to make the A side of the sealant coating on a small-scale:
1. Mix 20% of the di-terminal liquid elastomer with one of the alkacrylate monomers and combine with the polar wax, the reducing agent, if solid, is added as fine pieces, inhibitor, and DDBQ. The mixture is placed in an oven at 50-60°C for 1 to 2 hours (stirring every 15 min.) until all solids have been dissolved.
2. Mix remaining liquid elastomer with the acid phosphate monomer.
3. Add the solution from step 1 to the solution of step 2, while still hot and mix thoroughly.
4. Add talc or other filler and disperse completely.
5. Add the reducing agent and mix.
6. Add silica and mix until homogeneous.
The B-side is readily prepared by combining a peroxide which has been suspending in carrier fluid, with epoxy component, a thixotrope, and optional filler.

The seam protective coating according to the invention provides corrosion protection underneath the protective coating. The Association of German Automobile Manufacturers (VDA cycle) defines one cycle as: 1 day of salt spray (35 °C) fog test per SS DIN 50 021; followed by 4 days of condensed water environmental cycling KFW DIN 50 017; followed by 2 days of room temperature (18 to 28° C) according to DIN 50 014. After 10 VDA cycles, none or ca. 1 mm undercut corrosion is accepted. The coating thickness and precise metering controlled under robotic conditions as well as rheology of the coating have effects on the degree of undercut corrosion.

The protective coating is readily adapted for applying to a variety of metals, including cold rolled steel, galvanized steel, e.g., bonazinc and elozinc as these are known. The protective coating according to the invention is adapted for robotic application under static mixing heads, and preferably, with the use of a spinning core-dynamic mixing head.

The mandrel band test was performed according to ASTM D522-93a(2001) "Standard Test Methods for Mandrel Bend Test of Attached Organic Coatings.". For this test coatings were made on acetone washed, 4" x 12"-x 0.030" (10.1 x 30.4 x 0.076 cm) electrogalvanized metal panels, part no. ACT E60 EZG 60 G available from ACT Laboratories, Hillsdale, MI 49242. The panels were cleaned with acetone prior to coating as dispensed using a ConProTec MIXPAC (registered) System 50 (part #DMA 51-00-10) with 4:1 plunger (part #PLA 050-04). The nozzle was equipped with a 6" (15.2 cm) static mixer (part #MA 6.3-21-S) with an opening of 1/8" (0.32 cm).

### EXAMPLE 1

Percentages are by weight; mix ratio by volume.

**Example 1**

| Part A | | | | |
|---|---|---|---|---|
| | Component | | Wt.% of Part A | Total Wt. % in Mixed Formulation |
| Radical Polymerizable Components | Pbd dimethacrylate | 75% | 67.00 | 53.6 |
| | THFMA | 20% | 18.00 | 14.4 |
| | HEMA-P | 5% | 4.50 | 0.9 |
| Reducing Agent | DIIPT | | 1.50 | |
| Reducing Agent | DMAMP | | 1.00 | |
| | Antioxidant | | 0.006 | |
| Thixotrope | Fumed Silica | | 5.00 | |
| | Polar wax | | 3.00 | |
| | | | 100.00 % | |

| Part B | | | |
|---|---|---|---|
| Oxidizing Agent | Component Benzoyl peroxide, 40 wt.% in dibutyl phthalate | Wt. % of Part B 9.99 | Total Wt.% in Mixed Formulation 1.02 |
| Epoxy Resin | DGEBA | 48.01 | 9.6 |
| | Fumed Silica | 4.10 | 0.08 |
| | CaCO₃ | 29.82 | 5.96 |
| | Carbon black | 0.10 | 0.0002 |
| | Epoxy flexibilizer resin | 7.98 | 1.56 |

| Example 1 | Metal adhesion | |
|---|---|---|
| | A/B vol. ratio 4:1 | |
| Lap Shear Panels: ACT HDG G70 Adhesive dimension: 1x0.5x.010 in. (2.5 x 1.2x.024 cm) | RT Cured | Cure (30 mins (30')@ 204°C) |
| | PSI (Nm⁻²) x10⁻⁶ | PSI (Nm⁻²) |
| | 425 (2.93) | 1247 (8.59) |
| | Mandrel Bend (ASTM D 4338 - 97) | |
| | *Test at RT* | *Test at -30 ^{I}C* |
| RT Cured | Pass | Pass |
| cure (30 mins (30')@ 204 °C | Pass | Pass |

| | Mechanical Properties | |
|---|---|---|
| | RT Cured | Post baked |
| Young's Modulus | 1800 p.s.i. 1.24x10⁷ Nm⁻² | 18965 p.s.i. |
| % Elongation | 68% | 26.2% |

Examples 2-5 tabulate weight percent proportions of individual radical-polymerizable components to the combination of radical-polymerizables (Unsat.), and the overall weight percent of these components in the sealant as-dispensed (Total) according to the invention.

| Ingredient | Example 2 | | Example 3 | | Example 4 | | Example 5 | |
|---|---|---|---|---|---|---|---|---|
| | Total | Unsat. | Total | Unsat. | Total | Unsat. | Total | Unsat. |
| Acrylic Monomers* | 20.8 | 36.9% | 16.69 | 27.8% | 16.69 | 27.8% | 14.34 | 26.7% |
| HEMA-P | 3.6 | 6% | 3.6 | 6% | 3.6 | 6% | 2.55 | 4.7% |
| Pbd dimethacrylate | 35.2 | 59.1 % 100 % | 39.71 | 66.2% 100 % | 39.71 | 39.71 % 100 % | 36.68 | 68.47% 100 % |
| DIIPT | 1.2 | | 0.48 | | 2 | | 1.28 | |
| DMAMP | 0.8 | | 0.8 | | 0.8 | | --- | |
| Ester wax | 2.4 | | 2.4 | | 3.2 | | 2.92 | |
| Inorganic Filler | 13.995 | | 14.315 | | 10.795 | | 19.68 | |
| Fumed Silica | 2.82 | | 2.82 | | 4.02 | | 3.37 | |
| Antioxidants | 0.004 | | 0.004 | | 0.004 | | --- | |
| Benzoyl Peroxide (40%) | 2 | | 2 | | 2 | | 2 | |
| DGEBA | 9.6 | | 9.6 | | 9.6 | | 9.6 | |
| Atomite® | 5.96 | | 5.96 | | 5.96 | | 5.96 | |
| Epoxy B | 1.6 | | 1.6 | | 1.6 | | 1.6 | |
| Lampblack | 0.021 | | 0.021 | | 0.021 | | 0.021 | |

| | | | | | | | | |
|---|---|---|---|---|---|---|---|---|
| *** Combination of THFMA, CHMA, and HDODA** | | | | | | | | |

### EXAMPLES 6 - 12

The following examples illustrate the determination whether a sealant can pass the mandrel bend test.

Weight percent epoxy indicates the weight percent of epoxy in the dispensed sealant. Mandrel bend testing was performed by applying a 12" (30.5cm) long bead of the formulation to a steel panel (0.032" (0.081cm) thick) and curing 24 hours at ambient temperatures (RT). Extended baking/cure was conducted at 400°F (204°C) for 30 minutes. Mandrel bending was tested at room temperature (RT) and - 30°C. A "Pass" indicates that the sealant flexed without cracking or loss of adhesion to the metal. A crack, or pulling away result was deemed a "Fail". Initial adhesion and adhesion after extended bake was tested by using a putty knife to attempt to pry, or scrape the cured sealant from the steel panel. If sealant was easily removed, the failure was designated adhesive (adh). If sealant remained after scraping, the failure was designated cohesive (coh).

### Examples 8-11 pass the complete mandrel bend test.

| Example | Comp. 6 | Comp. 7 | 8 | 9 | 10 | 11 | Comp. 12 |
|---|---|---|---|---|---|---|---|
| THFMA | 10.18 | 13.58 | 16.29 | 16.29 | 16.29 | 18.51 | 18.51 |
| HEMA-P | 2.25 | 3.0 | 3.6 | 3.6 | 3.6 | 4.09 | 4.09 |
| Pbd dimethacrylate | 24.81 | 33.09 | 39.71 | 39.71 | 39.71 | 45.13 | 45.13 |
| DIIPT | 1.0 | 1.33 | 1.6 | 1.6 | 1.6 | 1.82 | 1.82 |
| Polar wax | 2.0 | 2.67 | 3.2 | 3.2 | 3.2 | 3.64 | 3.64 |
| Inorganic Filler | 28.756 | 23.653 | 15.596 | 17.596 | 18.375 | 18.863 | 18.613 |
| Fumed Silica | 4.0 | 4.0 | 4.0 | 4.0 | 4.0 | 3.64 | 3.64 |
| Antioxidant | 0.004 | 0.004 | 0.004 | 0.004 | 0.004 | 0.004 | 0.004 |
| Benzoyl Peroxide (40%) | 2.0 | 2.0 | 2.0 | 2.0 | 2.0 | 2.0 | 4.55 |
| DGEBA EPOXY RESIN | 25.0 | 16.67 | 14.0 | 12.0 | 9.6 | 2.3 | --- |
| Epoxy Flexibilizer | -- | --- | --- | --- | 1.6 | --- | --- |
| Carbon Black | --- | --- | --- | --- | 0.021 | --- | --- |
| | | | | | | | |
| Tested at RT, no Paint Bake | Pass | Pass | Pass | Pass | Pass | Pass | Pass |
| Tested at -30°C, no Paint Bake | Fail | Fail | Pass | Pass | Pass | Pass | Pass |
| Tested at RT, after Paint Bake | Pass | Pass | Pass | Pass | Pass | Pass | Fail* |
| Tested at -30°C, after Paint Bake | Fail | Fail | Pass | Pass | Pass | Pass | Fail* |
| Initial adhesion | 100% coh | 100% coh | 100% coh | 100% coh | 100% coh | 100% coh | 100% coh |
| Adhesion after | 100% | 100% | 100% | 100% | 100% | 100% | 100% |
| bake (pry test) | coh | coh | coh | adh | coh | adh | adh |

| | | | | | | | |
|---|---|---|---|---|---|---|---|
| * adhesive detached from CRS panel during post-bake. | | | | | | | |

The following examples 13-18 evaluated whether any amount of the ethylenic unsaturated elastomer having backbone Tg of -30°C and less provide a sealant that could pass a 180° mandrel bend before and after extended heat treatment. In the examples below the epoxy resin precursor (DGEBA) level was held constant at 10 weight percent of the total sealant composition.

| Example | 13 | 14 | 15 | 16 | 17 | 18 |
|---|---|---|---|---|---|---|
| THFMA | 19.12 | 16.29 | 24.84 | 27.18 | 32.2 | 40.8 |
| HEMA-P | 3.6 | 3.6 | 3.6 | 3.6 | 3.6 | 3.6 |
| Pbd | 51.68 | 39.71 | 32.12 | 30.02 | 25.0 | 16.0 |
| dimethacrylate | | | | | | |
| DIIPT | 1.6 | 1.6 | 1.6 | 1.6 | 1.6 | 1.6 |
| polar wax | --- | 3.2 | --- | --- | --- | --- |
| Inorganic | 5.96 | 18.375 | 20.6 | 20.36 | 20.36 | 20.76 |
| Filler | | | | | | |
| Fumed Silica | 4.0 | 4.0 | 3.2 | 4.0 | 3.2 | 3.2 |
| Antioxidant | --- | 0.004 | --- | -- | --- | --- |
| Benzoyl | 2 | 2.0 | 2 | 2 | 2 | 2 |
| Peroxide | | | | | | |
| (40%) | | | | | | |
| DGEBA | 9.6 | 9.6 | 9.6 | 9.6 | 9.6 | 9.6 |
| EPOXY | | | | | | |
| RESIN | | | | | | |
| Epoxy | 1.6 | 1.6 | 1.6 | 1.6 | 1.6 | 1.6 |
| flexibilizer | | | | | | |
| Carbon Black | 0.021 | 0.021 | 0.021 | 0.021 | 0.021 | 0.021 |
| Wt % rubber | 52 | 40 | 40 | 32 | 30 | 25 |
| 5.08 cm (2") mandrel bend: | | | | | | |
| • Tested at RT, no bake | Pass | Pass | Pass | Pass | Pass | Pass |
| • Tested at -30°C, no bake | Pass | Pass | Pass | Fail | Fail | Fail |
| • Tested at RT, after bake | Pass | Pass | Pass | Pass | Pass | Fail |
| • Tested at - | Pass | Pass | Pass | Fail | Fail | Fail |
| 30°C, after | | | | | | |
| bake | | | | | | |
| Initial adhesion | 100% | 100% | 100% | 100% | 100% | 100% |
| (dried up) | adh | coh | coh | coh | coh | coh |
| Post-bake | 100% | 100% | 100% | 100% | 100% | 100% |
| adhesion dried | coh | coh | coh | coh | coh | coh |
| up) | | | | | | |

In order to provide an acceptable sealant coating, the sealant must maintain flexibility properties before and after exposure to an abuse cure cycle of 30 minutes at 204°C, and not show cracks or delaminate from the coated metal after being bent 180 ° over a 2" (5.08 cm) mandrel at RT and -30°C. The above results indicate the sealant applied to metal containing from 32-55 weight percent of ethylenic unsaturated low molecular elastomer and from 2 weight percent to 15 weight percent of epoxy material will bend 180° over a 2 inch (5.08 cm.) mandrel before and after exposure to the abuse bake cycle when tested both at room temperature and at -30 °C.

## Claims

1. A room temperature-curable sealant composition comprising radical polymerizable component, an oxidizing agent and reducing agent;
wherein the radical-polymerizable component comprises 25 to 45 weight percent of at least one of an alkacrylate monomer and an unsaturated phosphorous monomer, and 55 to 75 weight percent of an ethylenic unsaturated liquid elastomer polymer having a number average MW of from 3,000 to 9,500 and a backbone T_{g} of -30 °C or below; and
wherein said elastomer polymer comprises from 32 to 55 weight percent of said composition.

2. The sealant composition according to claim 1, wherein said alkacrylate monomer comprises an α, β-unsaturated C₁-C₂₀ ester of alkyl (C₁-C₄) - substituted acrylic acid.

3. The sealant composition according to claim 2, wherein said alkacrylate is selected from the group consisting of methyl methacrylate, ethyl methacrylate, and butyl methacrylate, cyclohexyl methacrylate, 2-ethylhexyl methacrylate, decyl methacrylate, dodecyl methacrylate, tert-butyl methacrylate, 4-t-butyl-cyclohexylmethacrylate, 2-isopropyl 5-methyl cyclohexylmethacrylate, 3,5-dimethyl cyclohexylmethacrylate, 3,3,5-trimethylcyclohexyl methacrylate, 3,4,5-trimethylcyclohexyl methacrylate, 3,3,5,5-tetramethylcyclohexyl methacrylate, bornyl methacrylate, isobornyl methacrylate and tetrahydrofurfuryl methacrylate.

4. The sealant composition according to claim 3, wherein said ester monomer is selected from methyl methacrylate, tetrahydrofurfuryl methacrylate, bornyl methacrylate, and mixtures thereof.

5. The sealant composition of claim 1, further comprising an epoxy component.

6. The sealant composition of claim 5, wherein said epoxy component comprises from 2 to 15 weight percent of said sealant composition.

7. The sealant composition of claim 6, wherein said epoxy component comprises from 6 to 13 weight percent of said sealant composition.

8. The sealant composition of claim 1, further comprising a polar wax.

9. The sealant composition of claim 8, wherein the polar wax is present in the sealant composition in an amount from 1.5 to 5 weight percent.

10. The sealant composition of claim 1, wherein said radical-polymerizable component comprises an alkacrylate monomer and an unsaturated phosphorous monomer.

11. The sealant composition of claim 1, further comprising a rheology modifier.

12. The sealant composition according to claim 1, wherein said ethylenic unsaturated liquid elastomer is selected from the group consisting of methacrylate-terminated polybutadiene, acrylate-terminated polybutadiene, methacrylate-terminated polybutadiene-acrylonitrile copolymers, acrylate-terminated polybutadiene-acrylonitrile, and mixtures thereof.

13. The sealant composition according to claim 1, wherein said ethylenic unsaturated elastomer is selected from the group consisting of methacrylate-terminated polybutadiene, and acrylate-terminated polybutadiene.

14. The sealant composition according to claim 1, wherein said unsaturated phosphorous monomer is present from 1 to 10 weight percent of the total radical-polymerizable materials in the sealant composition.

15. A dispenser containing two containers and having a pump to convey the separate contents of said two containers to a mixing zone, in one container is a Part A composition and in the other said container is a Part B composition, said Part B is reactive with Part A at ambient temperature, said dispenser equipped with a metering device that controls the volume ratio of parts A and B dispensed into a mixing zone to form a mixture, and,
wherein said mixture comprises an alkacrylate monomer, an ethylenic unsaturated phosphorous monomer, from 32 to 55 weight percent of an ethylenic unsaturated elastomer having a number average MW of from 3000 to 9500, from 2 to 15 weight percent of an epoxy compound, from 1.5 to 5 weight percent of a polar wax, from 1 to 6 weight percent of a rheology modifier, from 2 to 5 weight percent of a redox initiator system, and from 0 to 35 weight percent of an inorganic filler.

16. A method for coating a seam formed by joined metal parts, comprising dispensing a sealant to cover the area of said seam, said sealant comprising:
radical polymerizable component,
from 2 to 15 weight percent of an epoxy component,
a polar wax,
a rheology modifier,
an oxidizing agent and reducing agent; and,
wherein the sealant **characterized by** the radical-polymerizable component comprising 25 to 45 weight percent of an alkacrylate monomer and co-reactive phosphorous monomer, and 55 to 75 weight percent of an ethylenic unsaturated liquid elastomer having a number average MW of from 3,000 to 9,500 and a backbone Tg of -30 °C or below, said elastomer making up from 32 to 55 weight percent of said sealant and said epoxy component making up from 2 to 15 weight percent of said sealant.

## Patentansprüche

1. Raumtemperatur-härtbare Versiegelungszusammensetzung, umfassend eine radikalisch polymerisierbare Komponente, ein Oxidationsmittel und ein Reduktionsmittel,
wobei die radikalisch polymerisierbare Komponente 25 bis 45 Gew.-% mindestens eines Alkacrylatmonomers und eines ungesättigten Phosphor-enthaltenden Monomers und 55 bis 75 Gew.-% eines ethylenisch ungesättigten, flüssigen Elastomerpolymers mit einem Zahlenmittel des Molekulargewichts von 3000 bis 9500 und einer Grundgerüst-T_{g} von -30°C oder weniger umfasst, und
wobei das Elastomerpolymer 32 bis 55 Gew.-% der Zusammensetzung ausmacht.

2. Versiegelungszusammensetzung nach Anspruch 1, bei der das Alkacrylatmonomer einen α,β-ungesättigten C₁-C₂₀-Ester einer Alkyl(C₁-C₄)-substituierten Acrylsäure umfasst.

3. Versiegelungszusammensetzung nach Anspruch 2, bei der das Alkacrylat aus der Gruppe, bestehend aus Methylmethacrylat, Ethylmethacrylat und Butylmethacrylat, Cyclohexylmethacrylat, 2-Ethylhexylmethacrylat, Decylmethacrylat, Dodecylmethacrylat, tert-Butylmethacrylat, 4-t-Butylcyclohexylmethacrylat, 2-Isopropyl-5-methylcyclohexylmethacrylat, 3,5-Dimethylcyclohexylmethacrylat, 3,3,5-Trimethylcyclohexylmethacrylat. 3,4,5- Trimethylcyclohexylmethacrylat, 3,3,5,5-Tetramethylcyclohexylmethacrylat, Bornylmethacrylat, Isobornylmethacrylat und Tetrahydrofurfurylmethacrylat, ausgewählt ist.

4. Versiegelungszusammensetzung nach Anspruch 3, bei der das Estermonomer aus Methylmethacrylat. Tetrahydrofurfurylmethacrylat, Bornylmethacrylat und Gemischen davon ausgewählt ist.

5. Versiegelungszusammensetzung nach Anspruch 1, die ferner eine Epoxykomponente umfasst.

6. Versiegelungszusammensetzung nach Anspruch 5, bei der die Epoxykomponente 2 bis 15 Gew.-% der Versiegelungszusammensetzung ausmacht.

7. Versiegelungszusammensetzung nach Anspruch 6, bei der die Epoxykomponente 6 bis 13 Gew.% der Versiegelungszusammensetzung ausmacht.

8. Versiegelungszusammensetzung nach Anspruch 1, die ferner ein polares Wachs umfasst.

9. Versiegelungszusammensetzung nach Anspruch 8, wobei das polare Wachs in der Versiegelungszusammensetzung in einer Menge von 1,5 bis 5 Gew.-% vorliegt.

10. Versiegelungszusammensetzung nach Anspruch 1, bei der die radikalisch polymerisierbare Komponente ein Alkacrylatmonomer und ein ungesättigtes Phosphor-enthaltendes Monomer umfasst.

11. Versiegelungszusammensetzung nach Anspruch 1, die ferner ein Rheologiemodifiziermittel umfasst.

12. Versiegelungszusammensetzung nach Anspruch 1, bei der das ethylenisch ungesättigte flüssige Elastomer aus der Gruppe, bestehend aus Polybutadien mit Methacrylat-Endgruppen, Polybutadien mit Acrylat-Endgruppen, Polybutadien-Acrylnitril-Copolymeren mit Methacrylat-Endgruppen, Polybutadien-Acryinitril mit Acrylat-Endgruppen und Gemischen davon, ausgewählt ist.

13. Versiegelungszusammensetzung nach Anspruch 1, bei der das ethylenisch ungesättigte Elastomer aus der Gruppe, bestehend aus Polybutadien mit Methacrylat-Endgruppen und Polybutadien mit Acrylat-Endgruppen, ausgewählt ist.

14. Versiegelungszusammensetzung nach Anspruch 1, bei der das ungesättigte Phosphor-enthaltende Monomer in einer Menge von 1 bis 10 Gew.% der gesamten radikalisch polymerisierbaren Materialien in der Versiegelungszusammensetzung vorliegt.

15. Spender, der zwei Behälter enthält und eine Pumpe zum Fördern des getrennten Inhalts der zwei Behälter zu einer Mischzone aufweist, wobei sich in einem Behälter eine Teil A-Zusammensetzung und in dem anderen Behälter eine Teil B-Zusammensetzung befindet, wobei der Teil B mit dem Teil A bei Umgebungstemperatur reaktiv ist, wobei der Spender mit einer Dosiervorrichtung ausgestattet ist, die das Volumenverhältnis der Teile A und B, die in eine Mischzone zur Bildung eines Gemischs abgegeben werden, steuert, und
wobei das Gemisch ein Alkacrylatmonomer, ein ethylenisch ungesättigtes Phosphor-enthaltendes Monomer, 32 bis 55 Gew.% eines ethylenisch ungesättigten Elastomers mit einem Zahlenmittel des Molekulargewichts von 3000 bis 9500, 2 bis 15 Gew.-% einer Epoxyverbindung, 1,5 bis 5 Gew.-% eines polaren Wachses, 1 bis 6 Gew.-% eines Rheologiemodifiziermittels, 2 bis 5 Gew.-% eines Redoxinitiatorsystems und 0 bis 35 Gew.-% eines anorganischen Füllstoffs umfasst.

16. Verfahren zum Beschichten eines Verbindungsabschnitts, der durch verbundene Metallteile ausgebildet ist, umfassend das Abgeben eines Versiegelungsmittels zum Bedecken des Bereichs des Verbindungsabschnitts, wobei das Versiegelungsmittel umfasst:
eine radikalisch polymerisierbare Komponente
2 bis 15 Gew.-% einer Epoxykomponente,
ein polares Wachs,
ein Rheoiogiemodifiziermittel,
ein Oxidationsmittel und ein Reduktionsmittel, und
wobei das Versiegelungsmittel durch die radikalisch polymerisierbare Komponente **gekennzeichnet** ist, die 25 bis 45 Gew.% eines Alkacrylatmonomers und eines coreaktiven Phosphor-enthaltenden Monomers und 55 bis 75 Gew.-% eines ethylenisch ungesättigten, flüssigen Elastomers mit einem Zahlenmittel des Molekulargewichts von 3000 bis 9500 und einer Grundgerüst-Tg von -30°C oder weniger umfasst, wobei das Elastomer 32 bis 55 Gew.% des Versiegelungsmittels ausmacht und die Epoxykomponente 2 bis 15 Gew.-% des Versiegelungsmittels ausmacht.

## Revendications

1. Composition d'étanchéité durcissable à la température comprenant un composant polymérisable par voie radicalaire, un agent oxydant et un agent réducteur ;
dans laquelle le composant polymérisable par voie radicalaire comprend 25 à 45 pour cent en poids d'au moins l'un d'un monomère alkacrylate et d'un monomère phosphoreux insaturé, et 55 à 75 pour cent en poids d'un polymère élastomère liquide à insaturation éthylénique ayant une masse moléculaire moyenne en nombre de 3 000 à 9 500 et une T_{g} de squelette de -30°C ou au-dessous ; et
dans laquelle ledit polymère élastomère comprend de 32 à 55 pour cent en poids de ladite composition.

2. Composition d'étanchéité selon la revendication 1, dans laquelle ledit monomère alkacrylate comprend un ester en C₁-C₂₀ α, β insaturé d'acide acrylique substitué par alkyle en C₁-C₄.

3. Composition d'étanchéfté selon la revendication 2, dans laquelle ledit acrylate est choisi dans le groupe constitué par le méthacrylate de méthyle, le méthacrylate d'éthyle et le méthacrylate de butyle, le méthacrylate de cyclohexyle, le méthacrylate de 2-éthylhexyle, le méthacrylate de décyle, le méthacrylate de dodécyle, le méthacrylate de tert-butyle, le méthacrylate de 4-t-butyl-cyclohexyle, le méthacrylate de 2-isopropyl-5-méthylcyclohexyle, le méthacrylate de 3,5-diméthylcyclohexyle, le méthacrylate de 3,3,5-triméthylcyclohexyle, le méthacrylate de 3,4,5-triméthylcyclohexyle, le méthacrylate de 3,3,5,5-tétraméthylcyclohexyle, le méthacrylate de bornyle, le méthacrylate d'isobornyle et le méthacrylate de tétrahydrofurfuryle.

4. Composition d'étanchéité selon la revendication 3, dans laquelle ledit monomère ester est choisi parmi le méthacrylate de méthyle, le méthacrylate de tétrahydrofurfuryle, le méthacrylate de bornyle et leurs mélanges.

5. Composition d'étanchéité selon la revendication 1, comprenant en outre un composant époxy.

6. Composition d'étanchéité selon la revendication 5, dans laquelle ledit composant époxy comprend de 2 à 15 pour cent en poids de ladite composition d'étanchéité.

7. Composition d'étanchéité selon la revendication 6, dans laquelle ledit composant époxy comprend de 6 à 13 pour cent en poids de ladite composition d'étanchéité.

8. Composition d'étanchéité selon la revendication 1, comprenant en outre une cire polaire.

9. Composition d'étanchéité selon la revendication 8, dans laquelle la cire polaire est présente dans la composition d'étanchéité dans une quantité de 1,5 à 5 pour cent en poids.

10. Composition d'étanchéité selon la revendication 1, dans laquelle ledit composant polymérisable par voie radicalaire comprend un monomère alkacrylate et un monomère phosphoreux insaturé.

11. Composition d'étanchéité selon la revendication 1, comprenant en outre un modificateur de rhéologie.

12. Composition d'étanchéité selon la revendication 1, dans laquelle ledit élastomère liquide à insaturation éthylénique est choisi dans le groupe constitué par le polybutadiène à terminaison méthacrylate, le polybutadiène à terminaison acrylate, les copolymères polybutadiène à terminaison méthacrylate-acrylonitrile, le polybutadiène à terminaison acrylate-acrylonitrile, et leurs mélanges.

13. Composition d'étanchéité selon la revendication 1, dans laquelle ledit élastomère liquide à insaturation éthylénique est choisi dans le groupe constitué par le polybutadiène à terminaison méthacrylate et le polybutadiène à terminaison acrylate.

14. Composition d'étanchéité selon la revendication 1, dans laquelle ledit monomère phosphoreux insaturé est présent de 1 à 10 pour cent en poids des matières polymérisables par voie radicalaire totales dans la composition d'étanchéité.

15. Distributeur contenant deux conteneurs et ayant une pompe pour acheminer les contenus séparés desdits deux conteneurs dans une zone de mélange, où, dans un conteneur se trouve une composition de Partie A et dans l'autre conteneur se trouve une composition de Partie B, ladite Partie B est apte à réagir avec la Partie A à la température ambiante, ledit distributeur est équipé d'un dispositif de mesure qui commande le rapport en volume des parties A et B distribuées dans une zone de mélange afin de former un mélange, et,
dans lequel ledit mélange comprend un monomère alkacrylate, un monomère phosphoreux à insaturation éthylénique, de 32 à 55 pour cent en poids d'un élastomère à insaturation éthylénique ayant une masse moléculaire moyenne en nombre de 3 000 à 9 500, de 2 à 15 pour cent en poids d'un composé époxy, de 1,5 à 5 pour cent en poids d'une cire polaire, de 1 à 6 pour cent en poids d'un modificateur de rhéologie, de 2 à 5 pour cent en poids d'un système amorceur redox et de 0 à 35 pour cent en poids d'une charge inorganique.

16. Procédé pour le revêtement d'un joint formé par des parties métalliques réunies, comprenant l'opération consistant à distribuer une matière d'étanchéité pour recouvrir la zone dudit joint, ladite matière d'étanchéité comprenant :
- un composant polymérisable par voie radicalaire ;
- de 2 à 15 pour cent en poids d'un composant époxy ;
- une cire polaire
- un modificateur de rhéologie ;
- un agent oxydant et un agent réducteur ; et
dans lequel la matière d'étanchéité est **caractérisée par le fait que** le composant polymérisable par voie radicalaire comprend 25 à 45 pour cent en poids d'un monomère alkacrylate et d'un monomère phosphoreux co-réactif, et 55 à 75 pour cent en poids d'un élastomére liquide à insaturation éthylénique ayant une masse moléculaire moyenne en nombre de 3 000 à 9 500 et une T_{g} de squelette de -30°C ou au-dessous, ledit élastomère représentant de 32 à 55 pour cent en poids de ladite matière d'étanchéité et ledit composant époxy représentant de 2 à 15 pour cent en poids de ladite matière d'étanchéité.
